# EUROPÄISCHE PATENTSCHRIFT

(11) **EP 3 616 576 B1**
(45) Veröffentlichungstag und Bekanntmachung des Hinweises auf die Patenterteilung: **10.11.2021**
(21) Anmeldenummer: 19190416.8
(22) Anmeldetag: 07.08.2019
(51) Int. Cl.: A47J 31/60

(54) **ENTKALKUNGSVERFAHREN FÜR EINE HEISSGETRÄNKEZUBEREITUNGSMASCHINE**
DECALCIFICATION METHOD FOR A HOT BEVERAGE PREPARATION MACHINE
PROCÉDÉ DE DÉTARTRAGE POUR UNE MACHINE DE PRÉPARATION DES BOISSONS CHAUDES

(30) Priorität: 29.08.2018 DE 102018214677
(43) Veröffentlichungstag der Anmeldung: 04.03.2020
(73) Patentinhaber: BSH Hausgeräte GmbH, 81739 München (DE)
(72) Erfinder: Fritz, Jürgen, 84553 Halsbach (DE); Mathes, Anton, 83364 Neukirchen am Teisenberg (DE); Beck, Rudolf, 84518 Garching a. d. Alz (DE); Steininger, Benedikt, 83122 Samerberg (DE); Mies, Maximilian, 83253 Rimsting (DE)

(56) Entgegenhaltungen:
- EP-A1- 3 298 933
- DE-A1-102012 105 442
- DE-A1-102013 106 148

## Beschreibung

Die Erfindung betrifft ein Verfahren zur Entkalkung einer Getränkezubereitungsmaschine für Heißgetränke, insbesondere für den Hausgebrauch.

Um gezielt für einen jeweiligen Leitungsabschnitt oder eine zu entkalkende Komponente eine geeignete bzw. präzise eingestellte Säurekonzentration der Lösung bereitstellen zu können, wird gemäß der DE 10 2013 106148 A1 eine Pumpe eines Getränkebereiters während einer Phase zum Entkalken seines Strömungsleitungssystems mit einer geringeren Förderleistung gegenüber der Nennförderleistung betrieben, wie sie für die Getränkezubereitung vorgesehen ist. Dadurch muss keine Überdosierung mehr vorgenommen werden, sodass insgesamt die zu entkalkenden Leitungsabschnitte und Komponenten einer schonenderen Behandlung während des Entkalkungsvorgangs ausgesetzt sind. Weitere Verfahren zur Entkalkung von Getränkezubereitungsmaschinen sind z. B. aus der DE 10 2012 105 442 A1 und der EP 3 298 933 A1 bekannt.

Die Aufgabe der vorliegenden Erfindung ist es, trotz fälliger Entkalkung Getränke kurzfristig bereitstellen zu können, ohne dass die Getränkezubereitungsmaschine dadurch beschädigt wird.

Die Aufgabe wird erfindungsgemäß durch ein Verfahren zur Entkalkung einer Getränkezubereitungsmaschine gelöst, die wegen eines maschinenseitig ermittelten Entkalkungsbedarfs für die Getränkezubereitung gesperrt ist, wobei ein Benutzer zum anschließenden Entkalken einen Entkalkungsprozess aus mehreren alternativen Entkalkungsprozessen der Getränkezubereitungsmaschine auswählt bzw. auswählen kann.

Maschinenseitig wird ein Entkalkungsbedarf regelmäßig nach Anzahl der Getränkebezüge und in Abhängigkeit von einem eingestellten Wasser-Härtegrad ermittelt. Daraufhin gibt die Zubereitungsmaschine in der Regel eine Meldung aus, die den Benutzer zur Entkalkung auffordert. Bei manchen Geräten wird eine bevorstehende Entkalkung mit einer entsprechenden Meldung angekündigt, wonach noch eine begrenzte Anzahl an Getränkebezügen möglich ist. Nach Überschreiten der Anzahl wird jedoch der weitere Getränkebezug maschinenseitig unterbunden. Die Getränkezubereitung wird dann erst nach einer Entkalkung wieder freigegeben. Somit kann eine zu starke Verkalkung verhindert werden.

Das Entkalkungsprogramm einer herkömmlichen Getränkezubereitungsmaschine dauert i.d.R. zwischen 20 Minuten und 60 Minuten. Es kann daher der Fall eintreten, dass die Getränkezubereitung just zu einem Zeitpunkt gesperrt wird, in dem vor einem gewünschten Getränkebezug nicht ausreichend Zeit für das Entkalkungsprogramm vorhanden verbleibt, beispielsweise falls sich unangekündigter Besuch einfindet. Erfindungsgemäß bietet sich dem Benutzer dann die Möglichkeit, zwischen mehreren Entkalkungsprozessen auszuwählen, die in unterschiedlichen Gewichtungen dem Entkalkungsbedarf einerseits und dem Zubereitungswunsch andererseits Rechnung tragen.

Die Getränkezubereitungsmaschine ist bevorzugt eine Getränkezubereitungsmaschine für den Hausgebrauch. Bevorzugt ist die Getränkezubereitungsmaschine eine Zubereitungsmaschine für Heißgetränke, beispielsweise mit Kaffee oder Tee als Brühgut.

Die Entkalkung einer Getränkezubereitungsmaschine ist der generelle Vorgang, der zum Schutz der Getränkezubereitungsmaschine regelmäßig durchgeführt wird, und durch den in der Zubereitungsmaschine angesammelte Ablagerungen von Kalk bzw. Calciumcarbonat und/oder von anderen Ausfällungen aus dem Zubereitungswasser zumindest teilweise beseitigt werden. Er kann neben den eigentlichen Entkalkungsprozess noch weitere Schritte umfassen, wie beispielsweise die Ausgabe einer Entkalkungsaufforderung.

Als Entkalkungsprozess ist eine vom Benutzer auswählbare Abfolge von Verfahrensschritten der Entkalkung zu verstehen, die unmittelbar zumindest eine Verringerung der Ablagerungen in der Getränkezubereitungsmaschine bewirken. Ein Entkalkungsprozess kann auch als Entkalkungsmodus, -programm, -vorgang oder -gang bezeichnet werden.

Erfindungsgemäß kann der Benutzer einen Entkalkungsprozess aus mehreren, sich unterscheidenden Entkalkungsprozessen der Getränkezubereitungsmaschine auswählen. Die Entkalkungsprozesse bieten also Entkalkungsalternativen, die dem Benutzer maschinenseitig zur Verfügung gestellt werden. Sie können sich beispielsweise unterscheiden i) hinsichtlich der einzelnen Prozessschritte und/oder ii) hinsichtlich einzelner Prozessparameter, insbesondere bzgl. der Dauer der einzelnen Prozessschritte.

Insbesondere können sich mindestens zwei Entkalkungsprozesse u.a. in mindestens einem der folgenden Parameter unterscheiden:
- zu verwendendes Entkalkungsmittel,
- zur Entkalkung zu verwendende Menge an Entkalkungsmittel;
- Geschwindigkeit, mit der das Entkalkungsmittel während der Entkalkung gefördert wird,
- Zeitdauer, die das Entkalkungsmittel einwirkt, und/oder
- Temperatur des Entkalkungsmittels.

Beispielsweise kann ein flüssiges Entkalkungsmittel für den erfindungsgemäßen Schnell-Entkalkungsprozess und ein festes, aber wasserlösliches Entkalkungsmittel (z.B. in Tablettenform oder Pulverform) für den erfindungsgemäßen Grund-Entkalkungsprozess eingesetzt werden. Ein flüssiges Entkalkungsmittel ist regelmäßig schneller einsatzbereit. Alternativ oder zusätzlich können Entkalkungsmittel mit unterschiedlicher chemischer Zusammensetzung für die unterschiedlichen Entkalkungsprozesse der Getränkezubereitungsmaschine eingesetzt werden. Insbesondere kann ein aggressiveres bzw. stärkeres Entkalkungsmittel für den Schnell-Entkalkungsprozess Anwendung finden.

In einer zusätzlichen oder alternativen Ausgestaltung kann die Menge bzw. Konzentration an Entkalkungsmittel (d.h. Dosierung) variiert werden, beispielsweise indem die für die Entkalkung genutzte Wassermenge variiert wird (z.B. weniger Wasser für die Schnell-Entkalkungsprozess). Über die genutzte Wassermenge kann also maschinenseitig auf die Konzentration des Entkalkungsmittels Einfluss genommen werden. Damit muss nicht der Benutzer auf die korrekte Zuordnung der jeweiligen Konzentration zum jeweiligen Entkalkungsprozess achten, womit eine Quelle für eine Fehlbedienung der Zubereitungsmaschine ausgeschlossen werden kann.

Die Geschwindigkeit, mit der das Entkalkungsmittel während der Entkalkung gefördert wird, kann beispielsweise durch die Leistung der Förderpumpe verändert werden. Auch kann der Betrieb der Förderpumpe unterschiedlich lange Pumppausen für die unterschiedlichen Entkalkungsprozesse vorsehen, um dem Entkalkungsmittel unterschiedliche Einwirkzeiten zu bieten. Je nach Dauer der Einwirkzeiten kann sich die Konzentration der Entkalkungsmittel unterscheiden.

Alternativ oder zusätzlich kann die Temperatur des Entkalkungsmittels während des Schnell-Entkalkungsprozesses höher sein als während des Grund-Entkalkungsprozesses. Bei höheren Temperaturen lösen die Entkalkungsmittel i.d.R. schneller die Ablagerungen auf. Zweckmäßig kann der Schritt vorgesehen sein, wonach eine Aufforderung zur Auswahl des Entkalkungsprozesses der mehreren Entkalkungsprozesse ausgegeben wird, beispielsweise über eine Mensch-Maschine-Schnittstelle, und bevorzugt nachdem die Zubereitungsmaschine gesperrt wurde und bevor der Benutzer den Entkalkungsprozess auswählt. Z.B. durch eine Menüauswahl an einem berührungsempfindlichen Bildschirm, an einem Schalter, einer Schalterkombination oder dergleichen als Mensch-Maschine-Schnittstelle kann der Benutzer seine Auswahl eingeben.

Gemäß dem erfindungsgemäßen Verfahren kann ein erster Entkalkungsprozess bzw. Schnell-Entkalkungsprozess der mehreren Entkalkungsprozesse der Getränkezubereitungsmaschine eine kürzere Entkalkungszeit aufweisen als ein zweiter Entkalkungsprozess bzw. Grund-Entkalkungsprozess oder Standard-Entkalkungsprozess. Die unterschiedlichen Zeitspannen ihrer jeweiligen Prozessdauer kann darauf beruhen, dass sich die beiden Entkalkungsprozesse in mindestens einem der vorgenannten Parameter unterscheiden. Die Entkalkungszeit ist dabei die Zeitspanne von Beginn des Entkalkungsprozesses bis zu dessen Abschluss. Bevorzugt weist der Schnell-Entkalkungsprozess eine Entkalkungszeit auf, die um mindestens 20%, mindestens 50% oder mindestens 80% geringer ist als die Entkalkungszeit des Grund-Entkalkungsprozesses.

Die Erfindung ermöglicht es dem Benutzer, eine aufgrund von Verkalkung gesperrte Getränkezubereitungsmaschine zwecks schnelleren Getränkebezugs schneller zumindest teilweise zu entkalken, um kurzfristig eine begrenzte Anzahl an Getränken zubereiten zu können. Dennoch steht ein zweiter, quasi herkömmlicher Entkalkungsmodus für eine gründliche Entkalkung zur Verfügung, die einen ausfallsicheren Betrieb der Getränkezubereitungsmaschine sicherstellt.

Zweckmäßig kann das erfindungsgemäße Verfahren eingesetzt werden, falls die Getränkezubereitungsmaschine zuvor wegen Ablagerungen für die Getränkezubereitung gesperrt wurde. Dies ist insbesondere der Fall, falls der vorgegebene Entkalkungszeitpunkt übermäßig überschritten wurde. Ist die Getränkezubereitung gesperrt, so gibt die Getränkezubereitungsmaschine auch nach Aufforderung durch den Benutzer kein Getränk mehr aus. Dies kann insbesondere dann der Fall sein, wenn ein Entkalkungsbedarf festgestellt wurde, unabhängig von der Methode der Feststellung, dass störende Ablagerungen tatsächlich oder wahrscheinlich einen für die Ablagerungen indikativen Grenzwert erreicht oder überschritten haben.

Erfindungsgemäß kann ein Intervall bzw. eine Zeitspanne für Getränkezubereitungen zwischen zwei aufeinander folgenden Entkalkungen abhängig sein von dem Entkalkungsprozess der letzten Entkalkung. Insbesondere kann das Intervall ein erstes Intervall sein bzw. als solches definiert sein, falls die letzte Entkalkung mit dem Schnell-Entkalkungsprozess durchgeführt wurde. Alternativ kann es ein zweites Intervall sein bzw. als zweites Intervall definiert sein, falls die letzte Entkalkung mit dem Grund-Entkalkungsprozess durchgeführt wurde. Erfindungsgemäß ist das erste Intervall kürzer als das zweite Intervall. Der Schnell-Entkalkungsprozess zieht also ein kürzeres Intervall nach sich und lässt damit weniger Zubereitungszyklen zu als der Grund-Entkalkungsprozess. Zweckmäßig kann vorgesehen sein, dass während oder nach einem Schnell-Entkalkungsprozess ein Hinweis ausgegeben wird, dass das nächste Intervall bzw. die nächste Zeitspanne für Getränkezubereitungsvorgänge kürzer ist oder eine konkrete Anzahl an verbleibenden Getränkebezügen bzw. Bezugszyklen bis zur nächsten Entkalkung angeben.

Vorteilhaft kann somit eine hohe Verkalkung der Maschine in dem Fall vermieden werden, in dem die Getränkezubereitungsmaschine nach einem Schnell-Entkalkungsprozess nicht in dem Maß entkalkt wurde, wie es bei einem Grund-Entkalkungsprozess der Fall ist und wie es durch vorangegangene Bezugszyklen erforderlich geworden ist.

Das Intervall beginnt zweckmäßig mit Abschluss des letzten bzw. vorherigen Entkalkungsprozesses und endet mit der darauffolgenden Entkalkung, zweckmäßig mit der erstmaligen Entkalkungsaufforderung oder mit dem Beginn des folgenden Entkalkungsprozesses. Ebenso wie ein Entkalkungsbedarf kann auch das Intervall definiert werden durch die Anzahl an Brühvorgängen bis zur Ausgabe der nächsten Entkalkungsaufforderung. Das Intervall kann aber auch anders definiert sein, z.B. durch einen Wert, der indikativ ist für die aufsummierte Brühzeit seit der letzten Entkalkung. Regelmäßig wird dabei der Härtegrad des Wassers, die zubereiteten Getränke und/oder die Art der Getränkezubereitung mit berücksichtigt. Insbesondere können neben der Wasserhärte auch die erhitzte Dampf- bzw. Wassermenge bei der Intervallbestimmung mit eingehen.

Eine weitere Getränkezubereitung kann gesperrt sein, sobald die Entkalkungsaufforderung ausgegeben wird. Alternativ kann eine Anzahl an Brühvorgängen nach dem erstmaligen Erscheinen der Entkalkungsaufforderung innerhalb des jeweiligen Intervalls bzw. nach der letzten Entkalkung noch möglich, aber auf einen Brühvorgangsgrenzwert begrenzt sein. Er kann dem Benutzer als verbleibende Anzahl an Getränkezubereitungen bis zur Sperrung der Getränkezubereitung angezeigt werden.

In einer Ausgestaltung kann vorgesehen sein, dass der Benutzer einen Entkalkungsprozess nur auswählen kann, falls die Anzahl an Brühvorgängen nach dem erstmaligen Erscheinen der Entkalkungsaufforderung innerhalb eines Intervalls den Brühvorgangsgrenzwert überschritten hat. Denn nur dann kann die Situation eintreten, dass dem Benutzer der Entkalkungsvorgang ungelegen kommt, weil er einen konkreten Zubereitungsbedarf hat. Die Getränkezubereitungsmaschine kann also nach Eingabe eines Entkalkungsbefehls zumindest immer dann unter Verwendung des Grund-Entkalkungsprozesses entkalkt werden, falls der Brühvorgangsgrenzwert noch nicht überschritten wurde. Denn bei einer derartigen, quasi freiwilligen Entkalkung bietet sich dem Benutzer in der Regel kein Konflikt zwischen einem Entkalkungs- und einem Zubereitungsbedarf. Vielmehr plant er eine herkömmliche Entkalkungsdauer ein. Mangels Auswahlerfordernis vereinfacht sich somit die Bedienung der Getränkezubereitungsmaschine.

Zur Sicherstellung einer vollständigen Entkalkung der Getränkezubereitungsmaschine kann zudem vorgesehen sein, dass der Benutzer einen Entkalkungsprozess nur auswählen kann, falls die vorherige Entkalkung mit dem Grund-Entkalkungsprozess erfolgte. Eine gesperrte Getränkezubereitungsmaschine kann also nur mit dem Grund-Entkalkungsprozess entkalkt werden, falls die vorherige Entkalkung mit einem Schnell-Entkalkungsprozess durchgeführten wurde bzw. jedem Schnell-Entkalkungsmodus folgt also grundsätzlich und maschinenseitig bedingt ein Grund-Entkalkungsprozess.

Die Aufgabe der Erfindung wird ferner gelöst durch eine Getränkezubereitungsmaschine, die eingerichtet ist, die erfindungsgemäßen Verfahren durchzuführen. Insbesondere kann die Getränkezubereitungsmaschine eine Mensch-Maschine-Schnittstelle umfassen, die dazu eingerichtet ist, eine Aufforderung zur Auswahl eines Entkalkungsprozesses auszugeben. Die Mensch-Maschine-Schnittstelle kann beispielsweise ein Display, ein Schalterfeld oder eine Leuchte sein.

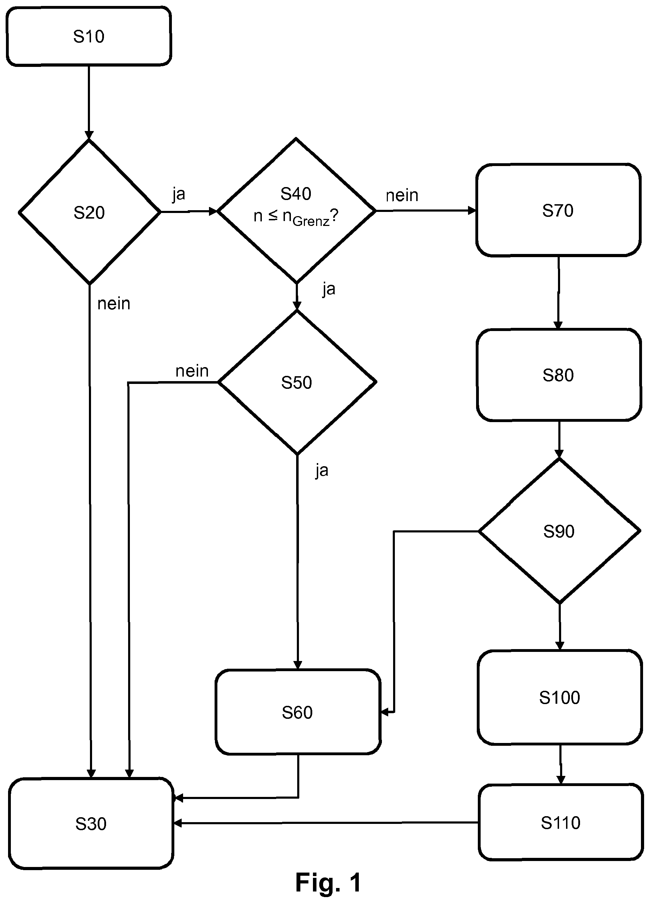

Das Prinzip der Erfindung wird nachstehend anhand der einzigen Figur 1 erläutert. Sie zeigt exemplarisch ein schematisches Ablaufdiagramm des erfindungsgemäßen Verfahrens.

Das Verfahren beginnt mit dem Schritt S10 als Start, beispielsweise beim Einschalten einer Zubereitungsmaschine. Im anschließenden Schritt S20 wird festgestellt, ob eine Aufforderung zum Entkalken vorliegt. Beispielsweise kann eine solche Entkalkungsaufforderung zum Ende eines Intervalls mit einem Hinweis an noch zugelassenen Getränkezubereitungen ausgegeben werden, bevorzugt über eine Displaymeldung oder eine Statusleuchte. Liegt keine Entkalkungsaufforderung vor, so ist die Getränkezubereitung (weiterhin) freigegeben und ein Benutzer kann in einem anschließenden Schritt S30 ein Getränk beziehen. Liegt indes eine Entkalkungsaufforderung vor, so wird in im Schritt S40 geprüft, ob der Wert n für die Anzahl an Getränkezubereitungen nach dem erstmaligen Erscheinen der Entkalkungsaufforderung seit der letzten Entkalkung größer ist als ein Brühvorgangsgrenzwert ngrenz. Nach der ersten Entkalkungsaufforderung wird also noch eine begrenzte Anzahl an Getränkezubereitungen zugelassen, bevor die Getränkezubereitung in einem folgenden Schritt 70 gesperrt wird.

Nun erfolgt eine nicht separat dargestellte Benutzereingabe, die die Entkalkungsaufforderung ignoriert oder nicht. Wurde der Brühvorgangsgrenzwert ngrenz noch nicht überschritten, so wird im Schritt S50 abgefragt, ob der Benutzer der Entkalkungsaufforderung nachgekommen ist. Hat der Benutzer die Entkalkung im Schritt S50 nicht angeordnet, so ist die Getränkezubereitung weiterhin und für eine begrenzte Anzahl an Zubereitungen in Schritt S30 freigegeben und ein Benutzer kann ein Getränk beziehen. Zugleich erhöht ein Zähler den Wert n für den nächsten Durchlauf des Verfahrens gemäß der Figur 1 um eine Getränkezubereitung. Wird im Schritt S50 indes festgestellt, dass der Benutzer die Entkalkung angeordnet hat, so wird im anschließenden Schritt S60 der Grund-Entkalkungsprozess S60 der Getränkezubereitungsmaschine durchgeführt. Nach Abschluss des Grund-Entkalkungsprozesses S60 wird die Getränkezubereitungsmaschine im Schritt S30 wieder freigegeben. Zugleich wird der Wert n für den Getränkebezug nach dem erstmaligen Erscheinen der Entkalkungsaufforderung wieder zurück auf den Wert n = 0 gesetzt.

Wurde im Schritt S40 indes festgestellt, dass der Brühvorgangsgrenzwert ngrenz bereits überschritten wurde, wonach eine Entkalkung betriebsnotwendig ist, so wird im folgenden Schritt S70 die Getränkezubereitung gesperrt. Anschließend wird im Schritt S80 der Benutzer zur Auswahl eines Entkalkungsprozesses aufgefordert. Erfindungsgemäß kann der Benutzer zwischen dem Grund-Entkalkungsprozess S60 und dem Schnell-Entkalkungsprozess S100 auswählen. Im Schritt S90 wird überprüft, welchen Entkalkungsprozess der Benutzer ausgewählt hat.

Hat sich der Benutzer für den Grund-Entkalkungsprozess S60 entschieden, so wird im Schritt S60 der Grund-Entkalkungsprozess S60 der Getränkezubereitungsmaschine durchgeführt. Nach Abschluss des Grund-Entkalkungsprozesses wird die Getränkezubereitungsmaschine anschließend wieder freigegeben (vgl. S30) und der Wert n wieder zurück auf den Wert n = 0 gesetzt.

Hat sich der Benutzer im Schritt S90 für den Schnell-Entkalkungsprozess S100 entschieden, so wird im alternativen Schritt S100 der Schnell-Entkalkungsprozess S100 der Getränkezubereitungsmaschine durchgeführt. Anschließend wird im Schritt S110 das Intervall bis zur nächsten Entkalkung begrenzt auf das erste Intervall. Das erste Intervall ist also ein Intervall, dass nach einem Schnell-Entkalkungsprozess S100 folgt.

Somit verursacht der Schnell-Entkalkungsprozess S100 hier ein kürzeres Intervall bis zur nächsten Entkalkungsaufforderung als ein Grund-Entkalkungsprozess S60 gemäß dem Schritt S60. Nach Abschluss des Schnell-Entkalkungsprozesses S100 wird wiederum der Wert n zurück auf den Wert n = 0 gesetzt. Zweckmäßig kann während oder nach einem Schnell-Entkalkungsprozess S100 ein Hinweis ausgegeben werden, dass das nächste Intervall bzw. die Anzahl an Getränkezubereitungen bis zur nächsten Entkalkung begrenzt ist. Sofern der Grund-Entkalkungsprozess S60 durchlaufen wurden, wird hier zweckmäßig als Intervall das zweite Intervall vorgesehen. Das zweite Intervall ist hier also ein Intervall, das mit Ablauf eines jeden Grund-Entkalkungsprozesses beginnt.

Da es sich bei dem vorhergehenden, detailliert beschriebenen Verfahren um ein Beispiel handelt, kann es in üblicher Weise vom Fachmann in einem weiten Umfang modifiziert werden, ohne den Bereich der Erfindung zu verlassen. Beispielsweise kann ein fakultativer Schritt vor dem Schritt S80, d.h. vor oder nach Schritt S40 oder S70, überprüfen, ob für die letzte Entkalkung der Schnell-Entkalkungsprozess S100 oder der Grund-Entkalkungsprozess S60 eingesetzt wurde. Anschließend kann dann bevorzugt die Aufforderung zur Entkalkungsauswahl (vgl. S80) nur ausgegeben werden, falls bei der letzten Entkalkung der Grund-Entkalkungsprozess S60 eingesetzt wurde. Anderenfalls bleibt die Getränkezubereitungsmaschine zweckmäßig solange gesperrt, bis der Grund-Entkalkungsprozess S60 durchgeführt wurde. Vorteilhafterweise können entsprechende Hinweise an den Benutzer ausgegeben werden. Außerdem schließt die Verwendung der unbestimmten Artikel "ein" bzw. "eine" nicht aus, dass die betreffenden Merkmale auch mehrmals oder mehrfach vorhanden sein können.

### Bezugszeichenliste

- S10: Start
- S20: Aufforderung "Entkalken"
- S30: Freigabe "Getränkezubereitung"
- S40: Überprüfung n≤ ngrenz
- S50: Start "(Grund-)EntkaIkung"
- S60: Grund-Entkalkungsprozess
- S70: Getränkezubereitung gesperrt
- S80: Aufforderung "Auswahl Entkalkung"
- S90: Auswahl "Grund- oder Schnellentkalkung"
- S100: Schnell-Entkalkungsprozess
- S110: Intervall-Begrenzung

## Patentansprüche

1. Verfahren zur Entkalkung einer aufgrund eines maschinenseitig ermittelten Entkalkungsbedarfs für die Getränkezubereitung gesperrten Getränkezubereitungsmaschine, **gekennzeichnet durch** den Schritt, wonach ein Benutzer einen Entkalkungsprozess (S60, S100) aus mehreren Entkalkungsprozessen (S60, S100) der Getränkezubereitungsmaschine auswählt.

2. Verfahren nach Anspruch 1, wobei ein Schnell-Entkalkungsprozess (S100) eine kürzere Entkalkungszeit aufweist als ein Grund-Entkalkungsprozess (S60).

3. Verfahren nach Anspruch 1 oder 2, wobei ein Intervall zwischen zwei Entkalkungen abhängig ist von dem Entkalkungsprozess (S60, S100) der letzten Entkalkung.

4. Verfahren nach Anspruch 3, wobei ein Intervall ein erstes Intervall ist, falls die letzte Entkalkung mit dem Schnell-Entkalkungsprozess (S100) durchgeführt wurde; wobei ein Intervall ein zweites Intervall ist, falls die letzte Entkalkung mit dem Grund-Entkalkungsprozess (S60) durchgeführt wurde; und wobei das erste Intervall kürzer ist als das zweite Intervall.

5. Verfahren nach einem der vorherigen Ansprüche, wobei eine Anzahl an Brühvorgängen nach dem erstmaligen Erscheinen der Entkalkungsaufforderung nach einer Entkalkung auf einen Brühvorgangsgrenzwert (ngrenz) begrenzt ist.

6. Verfahren nach Anspruch 5, wobei ein Entkalkungsprozess (S60, S100) aus den mehreren Entkalkungsprozessen (S60, S100) nur auswählbar ist, falls die Anzahl an Brühvorgängen den Brühvorgangsgrenzwert (ngrenz) überschritten hat.

7. Verfahren nach einem der Ansprüche 2 bis 6, wobei der Entkalkungsprozess aus den mehreren Entkalkungsprozessen (S60, S100) nur auswählbar ist, falls die letzte Entkalkung mit dem Grund-Entkalkungsprozess (S60) erfolgte.

8. Verfahren nach einem der vorherigen Ansprüche, wobei sich mindestens zwei Entkalkungsprozesse (S60, S100) in mindestens einem der folgenden Parameter unterscheiden:
• zu verwendendes Entkalkungsmittel, und/oder
• zur Entkalkung zu verwendende Menge oder Konzentration an Entkalkungsmittel, und/oder
• Geschwindigkeit, mit der das Entkalkungsmittel während der Entkalkung gefördert wird, und/oder
• Zeitdauer, die das Entkalkungsmittel einwirkt, und/oder
• Temperatur des Entkalkungsmittels.

9. Getränkezubereitungsmaschine , eingerichtet zur Durchführung von mindestens einem Verfahren nach einem der vorherigen Ansprüche.

10. Getränkezubereitungsmaschine nach Anspruch 9, umfassend eine Mensch-Maschine-Schnittstelle, die eingerichtet ist, eine Aufforderung zur Auswahl eines Entkalkungsprozesses (S60,S100) auszugeben.

## Claims

1. Method for decalcification of a beverage preparation machine which is blocked for the beverage preparation due to the need for decalcification determined by the machine, **characterised by** the step, whereby a user selects a decalcification process (S60, S100) from a number of decalcification processes (S60, S100) of the beverage preparation machine.

2. Method according to claim 1, wherein a rapid decalcification process (S100) has a shorter decalcification time than a basic decalcification process (S60).

3. Method according to claim 1 or 2, wherein an interval between two decalcifications is dependent on the decalcification process (S60, S100) of the last decalcification.

4. Method according to claim 3, wherein an interval is a first interval, if the last decalcification was carried out with the rapid decalcification process (S100); wherein an interval is a second interval if the last decalcification was carried out with the basic decalcification process (S60); and wherein the first interval is shorter than the second interval.

5. Method according to one of the preceding claims, wherein after the initial appearance of the decalcification request for a decalcification, a number of brewing cycles is limited to a brewing cycle limit value (nₗᵢₘᵢₜ).

6. Method according to claim 5, wherein a decalcification process (S60, S100) can only be selected from the number of decalcification processes (S60, S100) if the number of brewing cycles has exceeded the brewing cycle limit value (n_{grenz}).

7. Method according to one of claims 2 to 6, wherein the decalcification process can only be selected from the number of decalcification processes (S60, S100) if the last decalcification took place with the basic decalcification process (S60).

8. Method according to one of the preceding claims, wherein at least two decalcification processes (S60, S100) differ in at least one of the following parameters:
• decalcifier to be used, and/or
• quantity or concentration of decalcifier to be used for decalcification and/or
• speed with which the decalcifier is requested during the decalcification, and/or
• duration which the decalcifier works, and/or
• temperature of the decalcifier.

9. Beverage preparation machine, designed to carry out at least one method according to one of the preceding claims.

10. Beverage preparation machine according to claim 9, comprising a human-machine interface, which is designed to output a request to select a decalcification process (S60, S100).

## Revendications

1. Procédé de détartrage d'une machine distributrice de boissons bloquée dans sa préparation de boissons en raison d'un détartrage nécessaire communiqué par la machine, **caractérisé par** l'étape consistant pour un utilisateur à sélectionner un procédé de détartrage (S60, S100) parmi plusieurs procédés de détartrage (S60, S100) de la machine de préparation de boissons.

2. Procédé selon la revendication 1, dans lequel un procédé de détartrage rapide (S100) présente une durée de détartrage plus courte qu'un procédé de détartrage complet (S60).

3. Procédé selon la revendication 1 ou 2, dans lequel l'intervalle entre deux détartrages dépend du procédé de détartrage (S60, S100) du dernier détartrage.

4. Procédé selon la revendication 3, dans lequel un intervalle est un premier intervalle dans le cas où le dernier détartrage est effectué avec le procédé de détartrage rapide (S100) ; un intervalle étant un deuxième intervalle dans le cas où le dernier détartrage a été effectué par le procédé de détartrage complet (S60) ; et le premier intervalle étant plus court que le deuxième intervalle.

5. Procédé selon l'une des revendications précédentes, dans lequel le nombre de processus de percolation après la première apparition de l'invitation au détartrage est limité après un détartrage à une valeur limite de processus de percolation (n_{grenz}).

6. Procédé selon la revendication 5, dans lequel un procédé de détartrage (S60, S100) n'est sélectionnable parmi les plusieurs procédés de détartrage (S60, S100) que dans le cas où le nombre de processus de percolation a dépassé la valeur limite de processus de percolation (n_{grenz}) .

7. Procédé selon l'une des revendications 2 à 6, dans lequel le procédé de détartrage n'est sélectionnable parmi les plusieurs procédés de détartrage (S60, S100) que dans le cas où le dernier détartrage s'effectue par le procédé de détartrage complet (S60).

8. Procédé selon l'une des revendications précédentes, dans lequel au moins deux procédés de détartrage (S60, S100) se distinguent par au moins l'un des paramètres suivants :
• le produit de détartrage à utiliser, et/ou
• la quantité ou la concentration de produit de détartrage à utiliser pour le détartrage, et/ou
• la vitesse à laquelle le produit de détartrage est débité pendant le détartrage, et/ou
• la durée d'action du produit de détartrage, et/ou
• la température du produit de détartrage.

9. Machine de préparation de boissons aménagée pour la réalisation d'au moins un procédé selon l'une des revendications précédentes.

10. Machine de préparation de boissons selon la revendication 9, comprenant une interface homme-machine aménagée pour émettre une invitation à sélectionner un procédé de détartrage (S60, S100).
